# EUROPÄISCHE PATENTANMELDUNG

(11) **EP 3 940 256 A1**
(43) Veröffentlichungstag der Anmeldung: **19.01.2022**
(21) Anmeldenummer: 20186384.2
(22) Anmeldetag: 17.07.2020
(51) Int. Cl.: F16D 1/033, B25B 13/06, B25B 23/00, F16D 3/64

(54) **KUPPLUNG ZUR ELEKTRISCH ISOLIERTEN DREHMOMENTÜBERTRAGUNG UND VERWENDUNG DER KUPPLUNG MIT EINEM HANDWERKZEUG ODER IN EINEM ANTRIEBSSTRANG**

(71) Anmelder: Johannes Lübbering GmbH, 33442 Herzebrock-Clarholz (DE)
(72) Erfinder: LÜBBERING, Achim, 33442 Herzebrock-Clarholz (DE); BERGMANN, Bruno, 33334 Gütersloh (DE); PETERMANN, Johannes, 33442 Herzebrock-Clarholz (DE)
(74) Vertreter: Patent- und Rechtsanwälte Behrmann Wagner PartG mbB

(57) **Zusammenfassung**

Die Erfindung betrifft eine Verbindungsvorrichtung (10) zur elektrisch isolierten Drehmomentübertragung, aufweisend ein zylindrisches Antriebselement (1) zum selektiven Kontaktieren einer Antriebsvorrichtung, ein vom Antriebselement (1) elektrisch isoliert und koaxial angeordnetes zylindrisches Abtriebselement (2) zum Kontaktieren einer anzutreibenden Anordnung, wobei das Antriebs- und Abtriebselement (1,2) in einem Verbindungsbereich (3) der Vorrichtung (10) jeweils umfangsverteilt und in Rotationsrichtung (R) zueinander versetzt angeordnete Klauen (4,5) zur Drehmomentübertragung aufweisen, wobei zwischen den Klauen (4,5) des Antriebselements (1) und den Klauen des Abtriebselements (2) eine Mehrzahl druckfester Übertragungselemente (6) aus einem nichtleitenden Material, vorzugsweise aus Keramikmaterial, angeordnet sind.

## Beschreibung

Die vorliegende Erfindung betrifft eine Verbindungsvorrichtung zur elektrisch isolierten Drehmomentübertragung zwischen einem Antriebselement und einem Abtriebselement.

Bei der Herstellung von elektrisch angetriebenen Fahrzeugen, insbesondere bei der Montage von Akkumulatoren, sind spezielle Werkzeuge notwendig. Dies insbesondere, da aus fertigungstechnischen Gründen die Ackumulatoren bzw. Batteriezellen bei der Montage bereits voraufgeladen sind, so dass die Verschraubungen an unter Spannung stehenden Bauteilen durchzuführen sind, wobei eine Absicherung gegen Kurzschlüsse aufgrund der erheblichen Risiken für den Werker und die Fahrzeugbauteile zu erfolgen hat. Gleiches gilt bei an unter Spannung stehende Bauteile derartiger Fahrzeuge durchzuführende Reparaturen.

Entsprechende Montagewerkzeuge mit für den vorliegenden Anwendungsfall ausreichenden isolierenden Eigenschaften sind aus dem Stand der Technik bereits bekannt, beispielsweise in der Form von mit Kunststoff ummantelten und mit Kunststoffgriff versehenen Schraubendrehern, welche beispielsweise Spannungen bis wenigstens 1.000V (AC) standhalten können. Ebenfalls bekannt ist ein System aus isolierten Nüssen in Verbindung mit einer spezifisch geformten isolierenden Knarre. Dieses ermöglicht allerdings nur einen Durchschlagschutz, wenn beide Systemteile in Kombination verwendet werden, da die Knarre das isolierende Element zum Werker bildet. Die bekannten Werkzeuge sind somit auf den jeweiligen spezifischen Einsatzzweck beschränkt und somit nicht universell einsetzbar oder kombinierbar. Insbesondere können sie nicht mit anderen Antriebselementen, beispielsweise automatisierten Schraubvorrichtungen verwendet werden.

Ebenfalls bekannt sind durchschlagsichere Vorrichtungen zur Verbindung zweier Wellenelemente, insbesondere in der Form von durchschlagssicheren Kupplungen. Hierfür ist es bereits bekannt, eine Wellenkupplung in der Form einer Klauenkupplung mit einem integralen sternförmigen Einsatz aus Kunststoff bereitzustellen, wobei eine jeweilige Strebe des sternförmigen Einsatzes zwischen jeweils benachbart angeordneten Klauen zu Isolationszwecken und zur Drehmomentübertragung angeordnet sind. Der Einsatz ist dabei derart gestaltet, dass hauptsächlich Druckspannungen wirken, damit keine Festigkeitsprobleme entstehen. Das isolierende Kunststoffmaterial wird allerdings wie ein Dämpfer, so dass eine Drehbewegung nicht konstant ist. Zudem ist der benötigte Bauraum in Relation zum übertragenen Drehmoment sehr groß.

Der vorliegenden Erfindung liegt die Aufgabe zugrunde, die vorgenannten Nachteile des Standes der Technik zu überwinden oder zumindest deutlich abzuschwächen. Insbesondere soll eine verbesserte Verbindungsvorrichtung zur elektrisch isolierten Drehmomentübertragung bei Montagetätigkeiten und/oder zu Verbindungszwecken bereitgestellt werden, welche eine optimierte Drehmoment- und Bewegungsübertragung und gleichzeitig eine einfache und platzsparende Ausgestaltung ermöglicht. Diese Aufgabe wird durch den Gegenstand des unabhängigen Anspruchs gelöst. Die Unteransprüche stellen vorteilhafte Weiterbildungen der vorliegenden Erfindung dar. Die Erfindung adressiert zudem weitere Probleme, wie in der folgenden Beschreibung näher erläutert wird.

In einem ersten Aspekt betrifft die Erfindung eine Verbindungsvorrichtung zur elektrisch isolierten Drehmomentübertragung, aufweisend ein zylindrisches Antriebselement, vorzugsweise zum selektiven Kontaktieren einer Antriebsvorrichtung, ein vom Antriebselement elektrisch isoliert angeordnetes zylindrisches Abtriebselement, vorzugsweise zum Kontaktieren einer anzutreibenden Anordnung, wobei das Antriebs- und Abtriebselement in einem Verbindungsbereich der Vorrichtung jeweils umfangsverteilt und in Rotationsrichtung zueinander versetzt angeordnete Klauen zur Drehmomentübertragung aufweisen, und wobei zwischen den Klauen des Antriebselements und den Klauen des Abtriebselements eine Mehrzahl druckfester Übertragungselemente aus einem nichtleitenden Material angeordnet sind.

Die erfindungsgemäße Vorrichtung ermöglicht eine isolierte Übertragung der Rotationsbewegung und des Drehmoments vom Antriebs- auf das Abtriebselement. Durch die Mehrzahl an druckfesten Übertragungselementen wird im Gegensatz zum Stand der Technik eine konstante Übertragung der Rotationsbewegung und des Drehmoments zwischen Antriebs- und Abtriebselement ermöglicht und somit die Übertragungseffizienz und Übertragungsgenauigkeit optimiert, selbst bei relativ hohen Drehmomenten. Gleichzeitig ermöglichen die zwischen den Klauen des Antriebs- und Abtriebselements angeordneten Übertragungselemente eine einfache und platzsparende elektrische Isolierung der beiden Elemente der Vorrichtung, insbesondere als Durchschlagsicherung. Zusätzlich kann nicht nur ein Schutz für einen Werker sondern auch für das zu verschraubende Werkstück, insbesondere für Elektronikkomponenten und gegen Schäden durch elektrostatische Entladung, bereitgestellt werden.

Das Antriebs- und Abtriebselement bestehen vorzugsweise aus leitfähigem Material, insbesondere einem metallischen Werkstoff. Das Antriebs- und Abtriebselement können auch aus einem anderen Material gebildet sein. Die Übertragungselemente sind vorzugsweise aus Keramikmaterial gebildet.

Das Abtriebselement ist zum Antriebselement elektrisch isoliert angeordnet, d.h. das sich die jeweiligen Elemente, insbesondere die jeweiligen Klauen des Abtriebs- und Antriebselements nicht direkt und/oder nicht in elektrisch leitfähiger Weise berühren.

Die zwischen den Klauen des Antriebs- und Abtriebselements angeordneten Übertragungselemente sind vorzugsweise derart angeordnet, dass durch diese eine direkte Übertragung einer Dreh- bzw. Rotationsbewegung und eines Drehmoments von den Klauen des Antriebselements auf die Klauen des Abtriebselements erfolgt. Durch das nichtleitende Material der Übertragungselemente wird hierbei eine elektrische Isolierung zwischen dem Antriebs- und Abtriebselements bereitgestellt.

Die Übertragungselemente sind vorzugsweise derart angeordnet und/oder dimensioniert, dass diese einen Durchschlagschutz von wenigstens bis AC 1000V und DC 1500V, mehr bevorzugt von wenigstens bis AC 5000V und DC 7500V gewährleisten.

Unter "Mehrzahl" von Übertragungselementen werden vorliegend wenigstens zwei, bevorzugt wenigstens drei oder mehr Übertragungselemente verstanden. Unter "druckfest" wird vorliegend ein Übertragungselement aus einem formbeständigen Werkstoff, d.h. nicht-elastischen oder nicht-duktilen Werkstoff, verstanden, insbesondere nicht aus Kunststoffmaterial. In einer bevorzugten Ausführungsform weisen die Übertragungselemente eine Härte HV10 von wenigstens 5GPa bis 30GPa auf. Weiterhin bevorzugt weisen die Übertragungselemente eine Härte HV10 von wenigstens 10 GPa bis 30 GPa auf.

Die Übertragungselemente sind vorzugsweise gleichmäßig umfangsverteilt im Verbindungsbereich zwischen dem Antriebs- und dem Abtriebselment angeordnet. Die Übertragungselemente sind vorzugsweise radial angeordnet bzw. erstrecken sich vorzugsweise radial im Verbindungsbereich. Hierbei berühren sich die Übertragungselemente vorzugsweise nicht gegenseitig. Die Übertragungselemente sind vorzugsweise durch radial angeordnete zylindrische Elemente, insbesondere Zylinderstifte gebildet. Diese weisen vorzugsweise einen konstanten Durchmesser auf. Die jeweiligen Übertragungselemente weisen vorzugsweise eine gleichartige, d.h. nicht voneinander abweichende Geometrie oder äußere Abmessungen auf.

Die Klauen des Antriebs- und Abtriebselement erstrecken sich vorzugsweise jeweils axial, d.h. in Vorrichtungslängsrichtung. Die jeweiligen Klauen weisen einen im Wesentlichen kreissektorförmigen oder dreieckförmigen Querschnitt auf. Hierunter wird ein Querschnitt senkrecht zur Vorrichtungslängsrichtung verstanden.

Das Antriebs- und Abtriebselement weisen jeweils wenigstens zwei, bevorzugt wenigstens drei Klauen auf. Die jeweiligen Klauen des Antriebs- und Abtriebselement sind vorzugsweise im Wesentlichen gleichförmig ausgebildet. Die Klauen sind vorzugsweise am jeweiligen Antriebs- oder Abtriebselement gleichmäßig umfangsverteilt angeordnet. Die jeweiligen Klauen vom Antriebs- und Abtriebselement sind in Rotationsrichtung umfangsversetzt angeordnet. Dies bedeutet, dass die jeweiligen Klauen nicht stirnseitig aneinander anliegen, sondern in Rotationsrichtung versetzt und somit mit ihren jeweiligen Seitenflächen in Rotationsrichtung benachbart zueinander angeordnet sind.

Das Antriebselement und/oder das Abtriebselement weisen vorzugsweise eine zwischen den jeweiligen Klauen entlang der Rotationsachse verlaufende zentrale Bohrung oder zylindrische Ausnehmung auf. Die zentrale Bohrung erstreckt sich vorzugsweise durch den jeweiligen Grundkörper des Antriebs- oder Abtriebselements, von welchem sich die jeweiligen Klauen erstrecken. Die Bohrung verbindet ein dem Verbindungsbereich der Vorrichtung zugewandtes erstes Ende des Grundkörpers mit einem gegenüberliegenden zweiten Ende. Die Bohrung weist vorteilhafterweise ein Innengewinde auf, welche zum selektiven Einschrauben einer Einspritzdüse ausgebildet ist, die zum Einbringen von Isoliermaterial in einen Hohlraum zwischen Antriebs- und Abtriebselement im Verbindungsbereich der Vorrichtung dienen kann. In anderen Worten weist der Verbindungsbereich der Vorrichtung vorzugsweise einen Hohlraum zwischen Antriebs- und Abtriebselement auf, in welchem Isolationsmaterial eingebracht ist. Hierdurch kann die Durchschlagsfestigkeit zusätzlich gesteigert werden. Dies insbesondere da die Durchschlagsfestigkeit von beispielsweise Polypropylen als Isolationsmaterial mit etwa 52kV/mm deutlich höher ist als Luft mit 0,35kV/mm. Das Isoliermaterial ist vorzugsweise nicht-leitendes Material, insbesondere Kunststoffmaterial, und weist vorteilhaft einen Oberflächenwiderstand von wenigstens 10¹² Ohm auf.

Neben der oben beschriebenen Ausführungsform zur Bereitstellung einer Vollisolierung zwischen dem Antriebs- und Abtriebselement kann die Verbindungsvorrichtung auch zur Bereitstellung einer Teilisolierung bzw. der Bereitstellung einer ableitenden Isolierung zwischen Antriebs- und Abtriebselement ausgebildet sein. Dies kann insbesondere für den Schutz von Elektronikkomponenten gegen Schäden durch elektrostatische Entladung vorteilhaft sein. Hierbei weist die Verbindungsvorrichtung ein teilweise leitendes bzw. halb-leitendes Isoliermaterial oder ein elektrostatisch dissipatives Material als Isoliermaterial in der zentralen Bohrung oder zylindrischen Ausnehmung im Verbindungsbereich auf. Dieses ist vorzugsweise als halb-leitendes oder elektrostatisch ableitendes Kunststoffmaterial zwischen dem Antriebs- und das Abtriebselement ausgebildet. Das Kunststoffmaterial weist vorzugsweise einen Oberflächenwiderstand von 10² bis 10¹¹ Ohm auf, mehr bevorzugt einen Oberflächenwiderstand von 10⁶ bis 10¹¹ Ohm. Derartige Materialien sind dem Fachmann bekannt, wie beispielsweise TECA-FORM AH SD oder TECAPEEK SD der Firma Ensinger GmbH sowie antistatische oder elektrostatisch ableitende Kunststoffe der Firma KTK Kunststofftechnik GmbH.

Die Bohrung ist vorzugsweise mittels eines in das Innengewinde selektiv einschraubbaren Gewindestifts verschließbar ausgebildet. Hierdurch kann das Eindringen von Fremdkörpern in den Hohlraum zwischen Antriebs- und Abtriebselement verhindert werden und eine Verringerung der Durchschlagsfestigkeit beispielsweise durch leitende Späne verhindert werden.

In einer bevorzugten Ausführungsform weist die Vorrichtung im Verbindungsbereich angeordnetes Sensorelement auf, welches zur Detektion und/oder Überwachung einer Relativbewegung zwischen Antriebs- und Abtriebselement ausgebildet ist. Das Sensorelement ist vorzugsweise in einem Hohlraum zwischen Antriebs- und Abtriebselement angeordnet. Bevorzugt ist das Sensorelement über eine Bohrung im Antriebs- und/ oder Abtriebselement einbringbar oder damit, insbesondere mittels eines darin vorgesehenen Innengewindes, positionierbar. Das Sensorelement ist vorzugsweise derart ausgebildet, dass dieses eine Verdrehung, beispielweise aufgrund Überlast oder Materialermüdung, zwischen dem Antriebs- und Abtriebselement erkennt und ein entsprechendes Signal ausgibt. Hierdurch kann eine Defektmeldung durch entsprechende mit dem Sensorelement verbundene Kommunikationsmittel ausgegeben und/oder ausgelesen werden. Dies ermöglicht die zeitnahe Erkennung einer möglichen Fehlfunktion der Vorrichtung und somit eine zusätzliche Risikominimierung von Spannungsdurchschlägen. Das Sensorelement kann hierbei wenigstens einen Hall-Sensor, einen Piezo-Sensor und/oder eine Dehnungsmesstreifen-basierte Sensorik aufweisen.

In einer bevorzugten Ausführungsform weisen die jeweiligen Klauen des Antriebs- und Abtriebselements sich jeweils gegenüberliegend angeordnete radial oder axial zur Vorrichtungslängsrichtung verlaufende Ausnehmungen auf, in welchen das jeweilige Übertragungselement angeordnet ist. Die jeweiligen Ausnehmungen sind vorzugsweise radial verlaufende halb oder teil-zylindrische Ausnehmungen in einer jeweiligen Seitenfläche der Klauen, welche zur Aufnahme und Lagerung eines zylindrischen Übertragungselements ausgebildet sind. Alternativ können die jeweiligen Ausnehmungen axial verlaufende vorzugsweise halb oder teil-zylindrische Ausnehmungen in einer Stirnfläche der Klauen sein, welche zur Aufnahme und Lagerung eines zylindrischen oder kugelförmigen Übertragungselements ausgebildet sind.

Die jeweiligen Ausnehmungen können Positioniermittel aufweisen, beispielsweise in der Form von in und/oder an der Ausnehmung ausgebildeten Vor- und/oder Rücksprüngen, welche dazu ausgebildet oder angeordnet sind, eine definierte Positionierung der Übertragungselemente in der jeweiligen Ausnehmung zu gewährleisten. Die Positionierelemente können beispielsweise ein endseitiger bzw. radial innenliegender Ringvorsprung sein, auf welchem beispielsweise ein zylindrisches Übertragungselement nach dessen Einschub endseitig aufliegt.

Die jeweiligen Übertragungselemente sind vorzugsweise formschlüssig in den jeweiligen Ausnehmungen und vorzugsweise als Presspassung darin angeordnet.

Die Übertragungselemente sind vorzugsweise derart in den jeweiligen Ausnehmungen angeordnet, dass eine axiale Entkopplung des Antriebs- und Abtriebselements im Verbindungsbereich verhindert wird. Dies kann insbesondere durch die oben beschriebene radial angeordneten Ausnehmungen und darin angeordnete Übertragungselemente erzielt werden.

In einer bevorzugten Ausführungsform weist die Vorrichtung ein Überzugelement, vorzugsweise aus Kunststoffmaterial auf, welches den Verbindungsbereich umfangsseitig vorzugsweise vollständig überdeckt. Das Überzugelement ist vorzugsweise ein zylinderförmiges Element, welches sich axial um den Verbindungsbereich erstreckt. Das Überzugelement ist vorzugsweise als Schrumpfschlauch ausgebildet. Das Überzugelement weist vorzugsweise eine zweilagige und/oder zweifarbige Kunststoffschicht auf. Das Überzugelement kann hierbei Beschädigungen im Verbindungsbereich anzeigen und dient somit als Indikator für Beschädigungen. Das Überzugelement kann aus nicht-leitendem oder elektrostatisch ableitendem Kunststoffmaterial gebildet sein.

In einer bevorzugten Ausführungsform weist die Vorrichtung wenigstens vier, vorzugsweise wenigstens sechs einzelne Übertragungselemente auf, welche vorzugsweise gleichmäßig umfangsverteilt zwischen den Klauen des Antriebselements und den Klauen des Abtriebselements angeordnet sind.

Die Verbindungsvorrichtung ist vorzugsweise als Nuss zur Verbindung eines manuellen oder automatisierten Schraubwerkzeugs ausgebildet. Hierbei ist das Antriebselement zur selektiven Verbindung, insbesondere durch Aufstecken, mit einem manuellen oder automatischen Schraubwerkzeug ausgebildet. Das Antriebselement weist hierbei vorzugsweise eine stirnseitig angeordnete, mehrkantige, insbesondere vierkantige, Ausnehmung auf. Das Abtriebselement ist hierbei vorzugsweise zur selektiven Verbindung mit einer anzuziehenden Schraubverbindung, insbesondere einem Schraubkopf, ausgebildet. Das Abtriebselement weist hierbei vorzugsweise eine stirnseitig angeordnete, mehrkantige, insbesondere sechs- oder zwölfkantige, Ausnehmung bzw. Steckbuchse auf.

Der Vorteil dieser Ausbildung ist, dass die Nuss auf alle manuellen und automatisierten Schraubwerkzeuge aufgesetzt werden kann und die Anforderungen, eine optimierte Drehmomentübertragung ermöglicht und gleichzeitig einen wirksamen Durchschlagschutz bereitstellt. Hierdurch wird eine einfache Verwendung mit bereits bestehender Montagetechnik auch für Verschraubungen unter Spannung ermöglicht. Zudem ist das Verhältnis von erforderlichem Bauraum zu übertragbarem Drehmoment der Nuss fast identisch zu herkömmlichen Nüssen.

In einer weiteren bevorzugten Ausführungsform ist die Vorrichtung als Übertragungsvorrichtung, insbesondere als Kupplung, in einem Antriebs- oder Übertragungsstrang zwischen zwei rotierbaren bzw. rotierenden Wellen beispielsweise einer Antriebsmaschine ausgebildet. Hierbei sind das Antriebs- und Abtriebselement vorzugsweise als rotierbare bzw. rotierende Welle in einem Antriebs- oder Übertragungsstrang zur Drehmomentübertragung ausgebildet. Die Vorrichtung kann hierbei beispielsweise fest in der Maschine bzw. im jeweiligen Antriebs- oder Drehmomentübertragungsstrang verbaut bzw. angeordnet sein und/oder auch derart ausgebildet sein, dass diese als Modul austauschbar ist. Hierbei sind das Antriebs- und Abtriebselement vorzugsweise mit jeweils stirnseitigen Verbindungsmitteln ausgebildet, welche eine drehfeste Verbindung mit jeweiligen Abtriebs- oder Antriebspartnern im Antriebs- oder Übertragungsstrang ermöglichen. Die Verbindungselemente können mehrkantige Vor- oder Rücksprünge aufweisen, welche insbesondere zur Steckverbindung mit einem Antriebs- oder Abtriebspartner ausgebildet sind.

Eine derartige Anordnung ermöglicht eine effiziente Spannungsentkopplung bzw. einen Durchschlagschutz in verschiedensten technischen Gebieten, wobei gleichzeitig einen gegenüber beispielsweise herkömmlichen Klauenkupplungen eine optimierte Drehbewegungs- und Drehmomentübertragung bei geringem Bauraumbedarf ermöglicht wird.

In einem weiteren Aspekt betrifft die Erfindung die Verwendung einer Vorrichtung nach einem der vorhergehenden Ansprüche zur isolierenden Drehmomentübertragung mit einem manuellen oder automatischen Handwerkzeug, insbesondere bei Montagetätigkeiten, oder in einem Antriebsstrang.

Weitere Vorteile, Merkmale und Einzelheiten der Erfindung ergeben sich aus der nachfolgenden Beschreibung eines bevorzugten Ausführungsbeispiels sowie anhand der Figuren. Diese zeigen in:
- **Fig. 1a-1c**: eine perspektivische Vorder- und Rückansicht sowie eine Seitenansicht einer bevorzugten Ausführungsform der Verbindungsvorrichtung gemäß der vorliegenden Erfindung im zusammengesetzten Zustand;
- **Fig. 2a,2b**: eine perspektivische Vorder- und Rückansicht des Antriebselements und des Abtriebselements der Vorrichtung gemäß Fig. 1 mit eingesetzten Übertragungselementen;
- **Fig. 3**: eine seitliche Schnittansicht der Vorrichtung nach Fig. 1 und 2;
- Fig. 4a,4b: eine weitere bevorzugte Ausführungsform der erfindungsgemäßen Verbindungsvorrichtung aufweisend ein Innengewinde in einer zentralen Bohrung in seitlicher Schnittansicht; und
- Fig. 5: eine weitere bevorzugte Ausführungsform der erfindungsgemäßen Verbindungsvorrichtung aufweisend eine Sensorik zur Erfassung oder Überwachung einer Relativposition zwischen Antriebs- und Abtriebselement in seitlicher Schnittansicht.

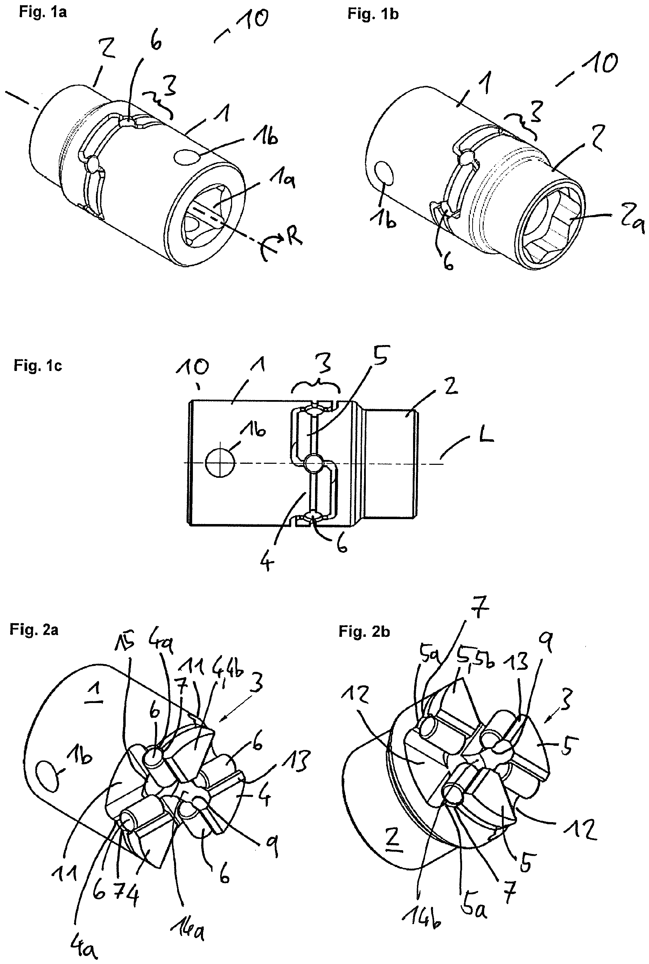

**Fig. 1a-1c** zeigen eine Verbindungsvorrichtung 10 zur elektrisch isolierten Drehmomentübertragung, beispielhaft in der Form einer Nuss, welche an eine manuelle oder automatisierte Antriebstechnik ankoppelbar bzw. aufsteckbar ausgebildet ist.

Die Verbindungsvorrichtung 10 weist ein im Wesentlichen zylindrische ausgebildetes Antriebselement 1 und ein davon elektrisch isoliert angeordnetes zylindrisches Abtriebselement 2 auf. Das Antriebselement 1 und das Abtriebselement 2 sind koaxial zueinander angeordnet. Das Antriebselement 1 ist hierbei zum selektiven Ankoppeln bzw. Aufstecken auf ein manuell oder automatisch angetriebenes Schraubwerkzeug ausgebildet und weist hierfür ein stirnseitig angeordnetes Verbindungsmittel 1a, insbesondere eine vierkantige Ausnehmung 1a auf. Das Antriebselement 1 kann optional Sicherungsmittel 1b in der Form von seitlich angeordneten, insbesondere wenigstens einer senkrecht zum Verbindungsmittel 1a angeordneten Ausnehmung oder Bohrung aufweisen. Diese ist vorzugsweise zum Zusammenwirken mit entsprechend angeordneten Sicherungszapfen eines Schraubwerkzeugs (nicht gezeigt) ausgebildet.

Das Abtriebselement 2 ist zur selektiven Verbindung mit einer anzuziehenden Schraubverbindung, insbesondere einem Schraubkopf oder einer Mutter, ausgebildet und weist ein stirnseitig angeordnetes Verbindungsmittel 2a, insbesondere eine mehrkantige, insbesondere sechs- oder zwölfkantige, Ausnehmung bzw. Steckbuchse 2a auf.

Die Vorrichtung 10 weist einen Verbindungsbereich 3 auf, in welchem das Antriebs- und Abtriebselement 1,2 in drehmomentübertragender und elektrisch isolierter Weise miteinander verbunden sind. Hierbei weisen das Antriebs- und Abtriebselement 1,2 jeweils umfangsverteilt und in Rotationsrichtung R zueinander versetzt angeordnete Klauen 4,5 zur Drehmomentübertragung auf, welche im, Verbindungsbereich 3 ineinandergreifend angeordnet sind. In der gezeigten bevorzugten Ausbildungsform weisen das Antriebs- und Abtriebselement 1,2 jeweils drei Klauen 4,5 auf.

Die Vorrichtung 10 weist zudem eine Mehrzahl druckfester Übertragungselemente 6 aus einem nichtleitenden Material auf, welche zwischen den Klauen 4,5 des Antriebselements 1 und des Abtriebselements 2 angeordnet sind. Die Übertragungselemente 6 sind dabei zwischen jeweils in Rotationsrichtung R benachbart angeordneten Klauen 4,5 des Antriebs- und Abtriebselement 1,2 angeordnet, um eine Drehbewegung der Klauen 4 des Antriebselements 1 auf die Klauen 5 des Abtriebselements 2 zu übertragen. Die Übertragungselemente 6 stellen hierbei auch ein Distanzelement zwischen dem Antriebselement 1 und dem Abtriebselement 2 zur elektrischen Isolation dar. Die Übertragungselemente 6 sind dabei vorzugsweise derart angeordnet, dass eine Relativbewegung zwischen Antriebselement 1 und Abtriebselement 2, insbesondere in Rotationsrichtung R, vermieden wird.

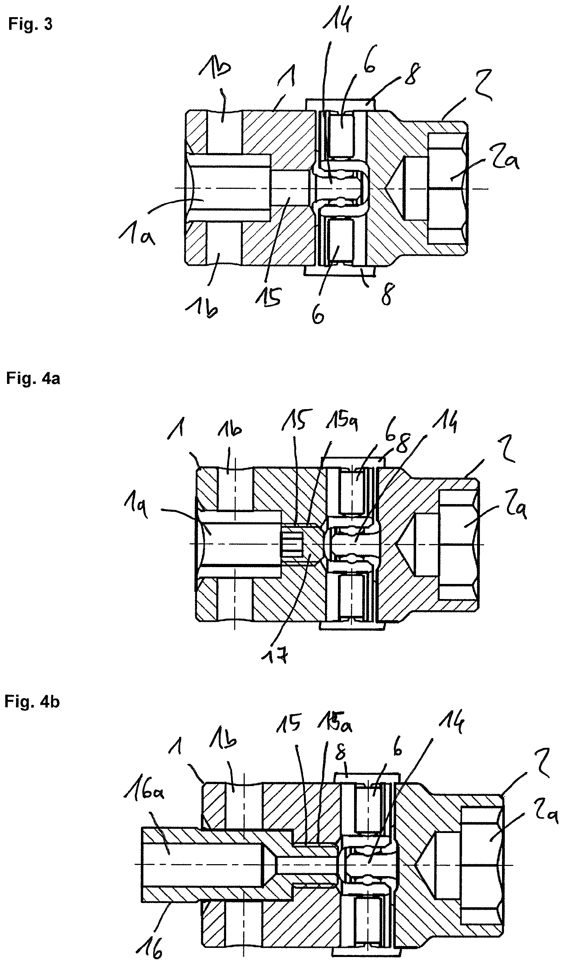

Die Vorrichtung 10 weist zudem ein optionales Überzugelement 8 auf (vgl. Fig. 3), welches den Verbindungsbereich 3 zwischen dem Antriebselement 1 und Abtriebselement 2 vorzugsweise vollständig überdeckt. Das Überzugelement 8 kann durch einen Schrumpfschlauch gebildet sein, welcher vorzugsweise zweifarbig und/oder zweilagig ausgebildet ist und als Indikator für Beschädigungen beispielsweise bei Spannungsübertretungen oder externen mechanischen Beeinträchtigungen dienen kann.

Wie in **Fig. 2a,2b** gezeigt, erstrecken sich die Klauen 4,5 jeweils axial vom im Wesentlichen zylindrischen Grundkörper des Antriebs- und Abtriebselements 1,2 in Vorrichtungslängsrichtung L. Die Klauen 4,5 weisen hierbei einen kreissektorförmigen Querschnitt auf, d.h. gesehen in einer Aufsicht in Vorrichtungslängsrichtung L. Zwischen den jeweiligen Klauen 4,5 ergeben sich somit kreissektorförmige Rücksprünge 11,12 im jeweiligen Antriebs- und Abtriebselement 1,2, in welches die Klauen des jeweiligen anderen Elements 1,2 eingreifen können. Die Klauen 5,6 und die Rücksprünge 11,12 sind hierbei so dimensioniert, dass keine direkte Berührung zwischen den jeweiligen Elementen stattfindet. Eine jeweilige Stirnfläche 4b,5b der Klauen 4,5 kann an ihren Kanten eine optionale Fase 13 aufweisen. Eine Kopplung bzw. Verbindung erfolgt hierbei nur durch die zwischenliegend zu den jeweiligen Klauen 4,5 angeordneten Übertragungselemente 6.

Das Antriebs- und Abtriebselement 1,2 weisen jeweils einen zentral angeordneten Hohlraum 14a,14b zwischen den Klauen 4,5 auf, welche im zusammengesetzten Zustand der Vorrichtung 10 einen gemeinsamen Hohlraum 14 zwischen den Klauen 4,5 bilden (vgl. **Fig. 3**). Das Antriebs- und/oder Abtriebselement 1,2 kann zudem eine axiale Bohrung 15 aufweisen, welche den Hohlraum 14a,14b mit einem gegenüberliegenden Ende des Grundkörpers des Antriebs- oder Abtriebselements 1,2 verbindet.

Die Klauen 4,5 weisen sich jeweils gegenüberliegend angeordnete radial verlaufende Ausnehmungen 7 auf, in welchen das jeweilige Übertragungselement 6 angeordnet ist. Die Ausnehmungen 7 sind hierbei vorzugsweise mittig in der Längserstreckung in Richtung L der jeweiligen Klaue 4,5 angeordnet. Die Ausnehmungen 7 sind im gezeigten Beispiel halbzylinderförmige Ausnehmungen, welche in einer jeweiligen Seitenfläche 4a,5a der Klauen 4,5 ausgebildet sind, und in welchen ein zylindrisches Übertragungselement 6 zur Übertragung einer Drehbewegung zwischen den jeweiligen Klauen 4,5 angeordnet bzw. gelagert ist. Das zylindrische Übertragungselement 6 kann insbesondere ein Zylinderstift sein, welche vorzugsweise aus Keramikmaterial gebildet ist.

Die jeweiligen Übertragungselemente 6 sind vorzugsweise formschlüssig in den jeweiligen Ausnehmungen 7 angeordnet und können als Presspassung in diesen angeordnet sein.

In einer nicht-dargestellten Ausführungsform können die jeweiligen Ausnehmungen 7 auch axial verlaufende, vorzugsweise halb- oder teil-zylinderförmige Ausnehmungen in einer jeweiligen gegenüberliegend angeordneten Stirnfläche 4b,5b der Klauen 4,5 umfassen, welche zur Aufnahme und Lagerung eines zylindrischen oder kugelförmigen Übertragungselements 6 ausgebildet sind.

Die jeweiligen Ausnehmungen 7 können Positioniermittel 9 aufweisen, beispielsweise in der Form von in und/oder an der Ausnehmung 7 ausgebildeten Vor- und/oder Rücksprüngen. Im dargestellten Beispiel sind die Ausnehmungen 7 durch einen endseitig angeordneten halbkreisförmigen Ringvorsprung als Positioniermittel 9 begrenzt und definiert somit eine maximale Einschubtiefe des jeweiligen Übertragungselements 6 in die jeweiligen gegenüberliegenden Ausnehmungen 7. Die Positioniermittel 9 sind vorzugsweise derart angeordnet oder dimensioniert, dass die Übertragungselemente 6 vollständig, d.h. ohne Überstand in radialer Richtung, in den jeweiligen Ausnehmungen 7 einführbar sind. Dies ist beispielsweise in **Fig. 3** gezeigt, wobei die Übertragungselemente 6 nicht in radialer Richtung über die Außenkontur der Mantelfläche des Antriebs- und/oder Abtriebselement 1,2 ragen.

**Fig. 4a,4b** zeigen eine weitere bevorzugte Ausführungsform der Verbindungsvorrichtung 10 aufweisend ein Innengewinde 15a in der zentralen Bohrung 15, vorliegend des Antriebselements 1.

Die Bohrung 15 verbindet den Hohlraum 14 mit der dem Hohlraum 14 gegenüberliegenden Seite des Antriebselements 1 und der darin angeordneten Ausnehmung 1a. Die Bohrung 15 weist ein Innengewinde 15a auf, in welchem selektiv ein Verbindungs- oder ein Verschlusselement eingeschraubt werden kann. Die Bohrung 15 kann beispielsweise mit einem Gewindestift 17 verschlossen werden, wie in Fig. 4a gezeigt. Hierdurch wird ein Eindringen von Fremdkörpern in den Hohlraum 14 zwischen Antriebs- und Abtriebselement 1,2 verhindert. Die Bohrung 15 kann zudem dazu dienen, eine Einspritzdüse 16 einer Füllvorrichtung (nicht gezeigt) mit einem darin befindlichen Kanal 16a aufzunehmen, mit welcher ein Isolationsmaterial wie beispielsweise Polypropylen in den Hohlraum 14 einbringbar ist. Die Einspritzdüse 16 kann nach erfolgtem Einspritzvorgang aus dem Gewinde 15a entfernt werden. Anschließend kann, falls gewünscht, ein Verschlusselement 15a eingeschraubt werden. Das Isolationsmaterial kann als ein nicht-leitendes oder elektrostatisch ableitendes Kunststoffmaterial ausgebildet sein.

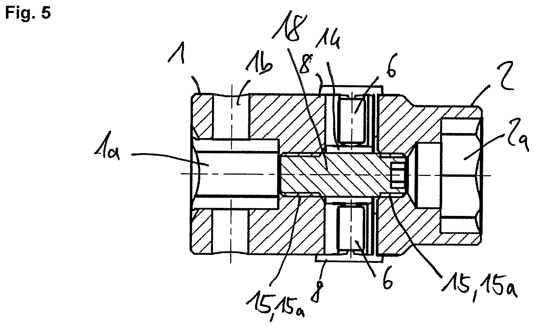

**Fig. 5** zeigt eine weitere bevorzugte Ausführungsform, in welcher die Vorrichtung 10 ein Sensorelement 18 aufweist. Dieses ist im Hohlraum 14 im Verbindungsbereich 3 angeordnet, derart, dass es eine Relativposition zwischen Antriebs- und Abtriebselement 1,2 erfasst und/oder eine Veränderung der Relativposition detektiert. Das Sensorelement 18 ist vorzugsweise in wenigstens einer zentralen Bohrung 15 des Antriebs- oder Abtriebselement 1,2 angeordnet bzw. gelagert. In der gezeigten, lediglich schematischen Darstellung, ist das Sensorelement 18 in sich gegenüberliegenden Bohrungen 15 im Antriebs- und Abtriebselement 1,2 angeordnet, vorzugsweise mittels Verschraubung mit einem darin jeweils angeordneten Innengewinde 15a. Das Innengewinde 15a kann zudem eine definierte Positionierung des Sensorelements 18 im Hohlraum 14 ermöglichen. Das Sensorelement 18 kann hierbei wenigstens einen Hall-Sensor, einen Piezo-Sensor und/oder eine Dehnungsmesstreifen-basierte Sensorik (nicht gezeigt) aufweisen. Das Sensorelement 18 ist vorzugsweise ausgebildet, bei einer erkannten Relativbewegung zwischen Antriebs- und Abtriebselement 1,2, insbesondere bei einer Verdrehung beispielsweise aufgrund von Überlast oder Materialermüdung, ein entsprechendes Warnsignal auszugeben. Hierzu kann das Sensorelement Kommunikationsmittel (nicht gezeigt) aufweisen, welche mit entsprechenden externen Kommunikationsmitteln zur Erfassung eines entsprechenden Signals zum insbesondere drahtlosen Zusammenwirken ausgebildet sind.

Die oben beschriebenen Ausführungsformen der erfindungsgemäßen Verbindungsvorrichtung sind lediglich beispielhaft. Insbesondere ist die vorliegende Erfindung nicht auf die gezeigten Ausführungsformen beschränkt, sondern kann in vielfältiger Weise als Verbindungselement zur elektrisch isolierten optimierten Drehmomentübertragung verwirklicht werden.

### Bezugszeichenliste

- 1: Antriebselement
- 1a: Verbindungsmittel, vierkantige Ausnehmung
- 2: Abtriebselement
- 2a: Verbindungsmittel, mehrkantige Ausnehmung
- 3: Verbindungsbereich
- 4: Klauen Antriebselement
- 4a: Seitenfläche Klaue Antriebselement
- 4b: Stirnfläche Klaue Antriebselement
- 5: Klauen Abtriebselement
- 5a: Seitenfläche Klaue Abtriebselement
- 5b: Stirnfläche Klaue Abtriebselement
- 6: Übertragungselement
- 7: Ausnehmung
- 8: Überzugelement
- 9: Positioniermittel, Ringvorsprung
- 10: Verbindungsvorrichtung
- 11: Rücksprung Klaue Antriebselement
- 12: Rücksprung Klaue Abtriebselement
- 13: Fase Stirnflächenkanten
- 14: Hohlraum
- 14a: Hohlraum Klauen Antriebselement
- 14b: Hohlraum Klauen Abtriebselement
- 15: Bohrung
- 15a: Innengewinde
- 16: Einspritzdüse
- 16a: Kanal
- 17: Gewindestift
- 18: Sensorelement

- R: Rotationsrichtung
- L: Längsrichtung

## Patentansprüche

1. Verbindungsvorrichtung (10) zur elektrisch isolierten Drehmomentübertragung, aufweisend
ein zylindrisches Antriebselement (1) zum selektiven Kontaktieren einer Antriebsvorrichtung,
ein vom Antriebselement (1) elektrisch isoliert und koaxial angeordnetes zylindrisches Abtriebselement (2) zum Kontaktieren einer anzutreibenden Anordnung,
wobei das Antriebs- und Abtriebselement (1,2) in einem Verbindungsbereich (3) der Vorrichtung (10) jeweils umfangsverteilt und in Rotationsrichtung (R) zueinander versetzt angeordnete Klauen (4,5) zur Drehmomentübertragung aufweisen,
**dadurch gekennzeichnet, dass**
zwischen den Klauen (4) des Antriebselements (1) und den Klauen (5) des Abtriebselements (2) eine Mehrzahl druckfester Übertragungselemente (6) aus einem nichtleitenden Material, vorzugsweise aus Keramikmaterial, angeordnet sind.

2. Vorrichtung nach Anspruch 1,
**dadurch gekennzeichnet, dass** die Übertragungselemente (6) durch radial angeordnete zylindrische Elemente, insbesondere Zylinderstifte, gebildet sind.

3. Vorrichtung nach Anspruch 1 oder 2,
**dadurch gekennzeichnet, dass** die Übertragungselemente (6) eine Härte HV₁₀ von wenigstens 5GPa, bevorzugt wenigstens 10GPa aufweisen.

4. Vorrichtung nach einem der Ansprüche 1 bis 3,
**dadurch gekennzeichnet, dass** die Klauen (4,5) sich jeweils axial erstrecken und im Wesentlichen einen kreissektorförmigen oder dreieckförmigen Querschnitt aufweisen.

5. Vorrichtung nach einem der vorhergehenden Ansprüche,
**dadurch gekennzeichnet, dass** die jeweiligen Klauen (4,5) des Antriebs- und/oder Abtriebselements (1,2) sich jeweils gegenüberliegend angeordnete radial oder axial verlaufende Ausnehmungen (7) aufweisen, in welchen das jeweilige Übertragungselement (6) angeordnet ist.

6. Vorrichtung nach Anspruch 5,
**dadurch gekennzeichnet, dass** die jeweiligen Ausnehmungen (7) radial verlaufende vorzugsweise halb- oder teilzylindrische Ausnehmungen in einer jeweiligen Seitenfläche (4a,5a) der Klauen (4,5) sind, welche zur Aufnahme und Lagerung eines zylindrischen Übertragungselements (6) ausgebildet sind.

7. Vorrichtung nach Anspruch 5,
**dadurch gekennzeichnet, dass** die jeweiligen Ausnehmungen (7) axial verlaufende vorzugsweise halb oder teil-zylindrische Ausnehmungen in einer Stirnfläche (4b,5b) der Klauen (4,5) sind, welche zur Aufnahme und Lagerung eines zylindrischen oder kugelförmigen Übertragungselements (6) ausgebildet sind.

8. Vorrichtung nach einem der vorhergehenden Ansprüche,
**dadurch gekennzeichnet, dass** die Übertragungselemente (6) formschlüssig in den jeweiligen gegenüberliegenden Ausnehmungen (7) und vorzugsweise als Presspassung angeordnet sind.

9. Vorrichtung nach einem der vorhergehenden Ansprüche,
**dadurch gekennzeichnet, dass** die Übertragungselemente (6) derart in den jeweiligen Ausnehmungen (7) angeordnet sind, dass eine axiale Entkopplung des Antriebs- und Abtriebselements (1,2) im Verbindungsbereich (3) verhindert wird.

10. Vorrichtung nach einem der vorhergehenden Ansprüche,
**dadurch gekennzeichnet, dass** die Vorrichtung (10) ein Überzugelement (8), vorzugsweise aus Kunststoffmaterial, aufweist, welches den Verbindungsbereich (3) umfangsseitig vorzugsweise vollständig überdeckt, und welches vorzugsweise zweilagig und/oder zweifarbig insbesondere als Indikator für Beschädigungen ausgebildet ist.

11. Vorrichtung nach einem der vorhergehenden Ansprüche,
**dadurch gekennzeichnet, dass** die Vorrichtung (10) einen im Verbindungsbereich (3) angeordneten Hohlraum (14) aufweist, in welchem eine Sensoreinheit (18) zur Detektion und/oder Überwachung einer Relativbewegung zwischen Antriebs- und Abtriebselement (1,2) angeordnet ist.

12. Vorrichtung nach einem der vorhergehenden Ansprüche,
**dadurch gekennzeichnet, dass** die Vorrichtung (10) wenigstens vier, vorzugsweise wenigstens sechs einzelne Übertragungselemente (6) aufweist, welche gleichmäßig umfangsverteilt zwischen den Klauen (4) des Antriebselements (1) und den Klauen (5) des Abtriebselements (2) angeordnet sind.

13. Vorrichtung nach einem der vorhergehenden Ansprüche,
**dadurch gekennzeichnet, dass** das Antriebselement (1) zur selektiven Verbindung mit einem manuellen oder automatischen Schraubwerkzeug ausgebildet ist, und/oder wobei das Abtriebselement (2) zur selektiven Verbindung mit einem anzuziehenden Schraubkopf ausgebildet ist.

14. Vorrichtung nach einem der vorhergehenden Ansprüche,
**dadurch gekennzeichnet, dass** das Antriebs- und/oder Abtriebselement (1,2) als rotierende Welle in einem Antriebs- oder Übertragungsstrang zur isolierten Drehmomentübertragung ausgebildet sind.

15. Verwendung einer Vorrichtung (10) nach einem der vorhergehenden Ansprüche zur isolierenden Drehmomentübertragung mit einem Handwerkzeug, insbesondere bei Montagetätigkeiten, oder in einem Antriebsstrang.
